# EUROPEAN PATENT APPLICATION

(11) **EP 3 379 052 A1**
(43) Date of publication of application: **26.09.2018**
(21) Application number: 15911396.8
(22) Date of filing: 25.12.2015
(51) Int. Cl.: F02B 37/00, F02B 37/18, F02D 23/00, F02D 43/00

(54) **ENGINE WITH EXHAUST TURBOCHARGER**

(71) Applicant: Mitsubishi Heavy Industries Engine & Turbocharger, Ltd., Sagamihara-shi, Kanagawa 252-5293 (JP)
(72) Inventor: FURUKAWA, Yuta, Tokyo 108-8215 (JP)
(74) Representative: Studio Torta S.p.A.
(86) International application number: PCT/JP2015/086294
(87) International publication number: WO 2017/109959

(57) **Abstract**

An engine with an exhaust turbocharger includes: an exhaust bypass passage connected to an exhaust passage and bypassing a turbine of the exhaust turbocharger; a waste gate valve configured to open and close the exhaust bypass passage; a throttle valve disposed in an intake passage; a first pressure sensor and a second pressure sensor disposed upstream and downstream of the throttle valve in the intake passage; and a valve open-close control unit configured to calculate a pressure difference on the basis of pressure values detected by the first pressure sensor and the second pressure sensor, close the waste gate valve if the pressure difference is smaller than a threshold which is set in advance, and open the waste gate valve if the pressure difference is greater than the threshold.

## Description

### TECHNICAL FIELD

The present disclosure relates to an engine with an exhaust turbocharger, which is mainly applied to a four-cycle gas engine, and includes an exhaust bypass passage connected from an exhaust turbocharger inlet of an exhaust passage to a turbocharger outlet bypassing the turbine, and a waste-gate valve for regulating the engine output by opening and closing the exhaust bypass passage.

### BACKGROUND ART

To adjust supply of the boost pressure to the engine by an exhaust turbocharger, for instance, a known engine with an exhaust turbocharger adjusts the inflow amount to the turbine by dividing a part of exhaust gas.

In such an engine with an exhaust turbocharger, as disclosed in Patent Document 1 for instance, an exhaust bypass passage is provided, which connects an exhaust turbocharger inlet and a turbocharger outlet of an exhaust passage to bypass a turbine, and a waste-gate valve is disposed in the exhaust bypass passage to open and close the exhaust bypass passage. A throttle valve is disposed in an intake passage which supplies intake air to the engine with an exhaust turbocharger. The throttle valve adjusts the opening degree of the throttle valve on the basis of detection values of an engine rotation speed detector which detects the engine rotation speed.

In the case of an engine with an exhaust turbocharger including such a throttle valve, during operation in which the temperature of intake air to the engine (intake temperature) or the humidity of intake air (intake humidity) are low, such as operation in winter or cold weather, an increase in the air density increases the boost pressure of the exhaust turbocharger, that is, the intake pressure. Thus, during operation with a low intake temperature or a low intake humidity, it is necessary to reduce the opening degree of the throttle valve compared to that in operation in summer or the like where the intake temperature and the intake humidity are high, in order to maintain the air excess rate at a predetermined target value. However, in this way, the pumping loss inside the cylinder may increase and the thermal efficiency may deteriorate, particularly in operation with a high load and a high rotation speed.

Thus, a minimum allowance opening degree is set for the throttle valve which can reduce an increase in the pumping loss in the cylinder, and during operation where the intake temperature and the intake humidity to the engine decrease, if the opening degree of the throttle valve becomes smaller than the minimum allowance opening degree, the opening degree of the waste-gate valve is increased, and in the exhaust gas flow rate applied to the exhaust turbine of the exhaust turbocharger is reduced. Thus, the intake amount supplied to the engine from the compressor of the exhaust turbocharger decreases and the engine rotation speed becomes lower, and the opening degree of the throttle valve increases to maintain the exhaust turbocharger at a target rotation speed. Thus, it is possible to operate the engine normally without reducing the opening degree of the throttle valve during operation of the engine when the engine has a high load and a high rotation speed. Accordingly, it is possible to avoid an increase in the pumping loss in the cylinder and prevent deterioration of the thermal efficiency during operation with a high load and a high rotation speed.

Furthermore, in a case of the engine with an exhaust turbocharger disclosed in Patent Document 1, during operation in which the intake temperature and the intake humidity to the engine decrease, the opening degree of the throttle valve is set to be fully open or nearly fully open, in order to maintain the air excess rate at a constant target value, and the opening degree of the waste-gate valve is controlled to reduce the difference between the actually measured value of the air excess rate of the engine and the target value of the air excess rate. Accordingly, it is possible to operate the engine normally at a predetermined air excess rate while maintaining the opening degree of the throttle valve to be large during operation of the engine with a high load and a high rotation speed. Accordingly, it is possible to avoid an increase in the pumping loss in the cylinder and prevent deterioration of the thermal efficiency during operation with a high load and a high rotation speed.

### Citation List

### Patent Literature

Patent Document 1: JP2010-14122A

### SUMMARY

### Problems to be Solved

However, while the throttle valve has a function to adjust the intake pressure downstream of the throttle valve in the intake passage, the relationship between the throttle valve opening degree and the pressure loss due to the throttle valve is not linear. Particularly when the throttle valve opening degree is near the fully-open opening degree, the sensitivity of the pressure loss due to the throttle valve with respect to the throttle valve opening degree is low, and thus using the throttle valve opening degree near the fully-open opening degree may deteriorate the accuracy for obtaining a desired air excess rate.

Furthermore, the throttle valve has individual variability. Even in a case where the throttle valve opening degree is constant, the pressure loss due to the throttle valve may not necessarily become constant, which may lead to failure to ensure a necessary load responsiveness, and deteriorate the pumping loss unnecessarily.

Furthermore, the pressure loss due to the throttle valve is affected also by the flow rate of intake air or the like, besides the opening degree of the throttle valve. Thus, even if the throttle valve opening degree is constant, the pressure loss of the throttle valve may not necessarily be constant, which may lead to failure to ensure a necessary load responsiveness, and deteriorate the pumping loss unnecessarily.

In view of the above, an object of at least some embodiments of the present invention is to provide an engine with an exhaust turbocharger which is capable of ensuring a necessary load responsiveness regardless of the magnitude of the opening degree of the throttle valve or the individual variability of the throttle valve, and which has no risk of unnecessary deterioration of the pumping efficiency.

### Solution to the Problems

An engine with an exhaust turbocharger according to some embodiments of the present invention includes: an exhaust bypass passage connected from an inlet of the exhaust turbo charger in an exhaust passage to an outlet of the exhaust turbocharger, bypassing a turbine of the exhaust turbocharger; a waste gate valve configured to regulate an engine output by opening and closing the exhaust bypass passage; a throttle valve configured to control an intake amount to the engine, to an intake passage between the exhaust turbocharger and the engine; a first pressure sensor and a second pressure sensor disposed upstream and downstream of the throttle valve in the intake passage, and configured to detect an intake pressure in the intake passage; and a valve open-close control unit configured to calculate a pressure difference of pressure values detected by the first pressure sensor and the second pressure sensor from the pressure values, close the waste gate valve if the calculated pressure difference is smaller than a threshold which is set in advance, and open the waste gate valve if the calculated pressure difference is greater than the threshold.

In the engine with an exhaust turbocharger, if the intake amount is insufficient, the engine rotation speed is maintained to be constant, and the throttle valve operates toward the open side. Thus, the pressure difference across the throttle valve becomes smaller than the threshold, and the waste-gate valve operates toward the close side. Accordingly, it is possible to ensure a load responsiveness without increasing the opening degree of the throttle valve. Furthermore, if the intake amount is too large, to maintain the engine rotation speed to be constant, the throttle valve operates toward the close side. Thus, the pressure difference across the throttle valve becomes greater than the threshold, and the waste-gate valve operates toward the open side. Accordingly, it is possible to avoid an increase in the pumping loss without reducing the opening degree of the throttle valve.

Further, in some embodiments, the threshold is set to be constant in a region where an engine load is high, an is set to be a threshold greater than the constant threshold in a region where the engine load is low, and the valve open-close control unit is configured to control an opening degree of the waste gate valve to be smaller in a region where the threshold is greater than the constant threshold, and control the opening degree of the waste gate valve to be greater in the region where the threshold is constant.

In this case, the valve open-close control unit controls the opening degree of the waste gate valve to be smaller in a region where the threshold is greater than the constant threshold, and controls the opening degree of the waste gate valve to be greater in the region where the threshold is constant. Thus, for instance, it is possible to control the opening degree of the waste-gate valve at the small side in a low-load region where a risk of variation of the engine load is high. Thus, the boost pressure of intake air by the turbocharger is high and the adjustment allowance of the intake amount by the throttle valve is large. Thus, it is possible to ensure a load responsiveness corresponding to load variation. Furthermore, in a high-load region where the engine load is likely to become constant, it is possible to control the opening degree of the waste-gate valve at the large side, and thus it is possible to reduce the boost pressure of intake air by the turbocharger and reduce the risk of unnecessary reduction of the pumping efficiency.

Further, in some embodiments, the threshold in the region where the threshold is greater than the constant threshold is set in advance as a function or a map with respect to a load of the engine such that the threshold decreases with an increase in the engine load.

In this case, the modified threshold in the region where the threshold is greater than the constant threshold is set in advance as a function or a map with respect to a load of the engine or such that the threshold decreases with an increase in the engine load. Thus, for instance, in a case where the engine load gradually increases in a low load region with a high risk of variation of engine load, it is possible to ensure a load responsiveness corresponding to the load variation even more reliably.

Further, in some embodiments, the threshold in the region where the threshold is greater than the constant threshold is set in advance as a function or a map with respect to a lubricant oil temperature of the engine such that the threshold decreases with a decrease in a lubricant oil temperature.

In this case, in a region with a low lubricant oil temperature, where the engine load responsiveness is low, it is possible to control the opening degree of the waste-gate valve at the small side. Thus, the boost pressure of intake air by the turbocharger is high and the adjustment allowance of the intake amount by the throttle valve is large. Thus, it is possible to make up for the load responsiveness.

### Advantageous Effects

According to at least some embodiments of the present invention, it is possible to provide an engine with an exhaust turbocharger which is capable of ensuring a necessary load responsiveness regardless of the magnitude of the opening degree of the throttle valve or the individual variability of the throttle valve, and which has no risk of an increase in the pumping loss.

### BRIEF DESCRIPTION OF DRAWINGS

FIG. 1 is a system diagram showing the overall configuration of an engine with an exhaust turbocharger according to an embodiment of the present invention.
FIG. 2 is a block diagram of a waste gate valve controller.
FIG. 3 is a graph for describing the sensitivity of the throttle valve opening degree and the pressure difference across the throttle valve, with respect to the intake flow rate.
FIG. 4 is a control explanatory diagram in a case where load variation can be addressed when a pressure difference is ensured.
FIG. 5 is a control explanatory diagram in a case where load variation cannot be addressed when a pressure difference is insufficient.
FIG. 6 is a control explanatory diagram of an engine with an exhaust turbocharger.
FIG. 7 is a control explanatory diagram in a case where the threshold of the pressure difference across the throttle valve is changed in accordance with an engine load.

### DETAILED DESCRIPTION

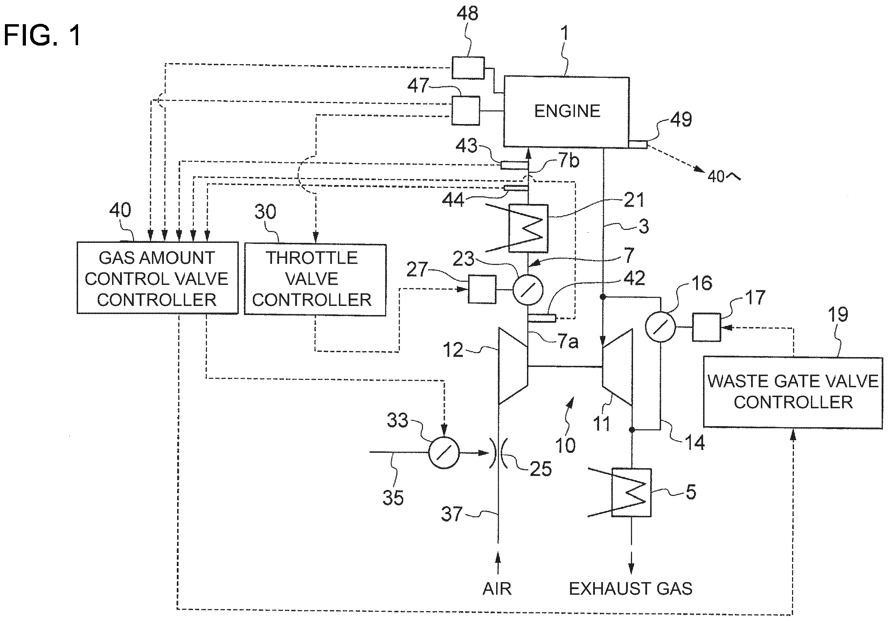

Embodiments of a gas engine of the present invention will now be described with reference to FIGs. 1 to 7. It is intended, however, that unless particularly specified, dimensions, materials, shapes, relative positions and the like of components described in the embodiments shall be interpreted as illustrative only and not intended to limit the scope of the present invention.

An engine 1 with an exhaust turbocharger (hereinafter, simply referred to as "engine 1") includes a waste heat recovery device 5 and an exhaust turbine 11 of an exhaust turbocharger 10, which are arranged from downstream to upstream in an exhaust passage 3 of the engine 1. The waste heat recovery device 5 recovers waste heat and discharges the same to outside. To the exhaust passage 3, between an exhaust turbocharger inlet and an exhaust turbocharger outlet, an exhaust bypass passage 14 bypassing the exhaust turbine 11 of the exhaust turbocharger 10 is connected. A waste gate valve 16 for opening and closing the exhaust bypass passage 14 is disposed in the exhaust bypass passage 14. The waste gate valve 16 includes a waste gate valve actuator 17 for driving the waste gate valve 16 to open and close. The waste gate valve actuator 17 is operated by a waste gate valve controller 19 described below.

Further, the engine 1 includes an intake cooler 21, a throttle valve 23, a compressor 12 of the exhaust turbocharger 10, and a mixer 25, which are arranged from downstream toward upstream, in the intake passage 7 of the engine 1. The intake cooler 21 cools intake air and supplies the intake air to the engine 1. The throttle valve 23 regulates the flow rate of intake air. A throttle valve actuator 27 for regulating the opening degree of the throttle valve 23 is connected to the throttle valve 23. Operation of the throttle valve actuator 27 is controlled by a throttle valve controller 30 described below. A gas amount control valve 33 is connected to the mixer 25, and the mixer 25 supplies the compressor 12 of the exhaust turbocharger 10 with mixed gas of fuel gas from a fuel gas passage 35 and intake air from an intake air passage 37 connected to the gas amount control valve 33. The gas amount control valve 33 is controlled to open and close by a gas amount control valve controller 40.

Of the intake passage 7, in an intake passage 7a between the throttle valve 23 and the compressor 12, a first pressure sensor 42 for detecting the intake pressure in the intake passage 7a is disposed. Further, in the intake passage 7b downstream of the intake cooler 21, a second pressure sensor 43 for detecting the intake pressure in the intake passage 7b and an intake temperature sensor 44 for detecting the intake pressure in the intake passage 7b are disposed. The first pressure sensor 42, the second pressure sensor 43, and the intake temperature sensor 44 are electrically connected to the waste gate valve controller 19 via the gas amount control valve controller 40. Further, the engine 1 includes an engine rotation speed sensor 47 for detecting the engine rotation speed and an engine load sensor 48 for detecting the engine load, which are mounted to the engine 1 and electrically connected to the gas amount control valve controller 40. The engine 1 may be provided with a lubricant oil temperature sensor 49 described below, which detects the temperature of lubricant oil in the engine 1.

Next, the throttle valve controller 30, the gas amount control valve controller 40, and the waste gate valve controller 19 will be described. The throttle valve controller 30 controls the throttle valve actuator 27 on the basis of the detection value of the engine rotation speed from the engine rotation speed sensor 47, and controls the opening degree of the throttle valve 23. The gas amount control valve controller 40 calculates an air-fuel ratio of the engine on the basis of the detection value of the intake pressure from the second pressure sensor 43, the detection value of the intake temperature from the intake temperature sensor 44, and the detection value of the engine rotation speed from the engine rotation speed sensor 47, and calculates the opening degree of the gas amount control valve 33 corresponding to the air-fuel ratio of the engine, to control operation of the gas amount control valve 33.

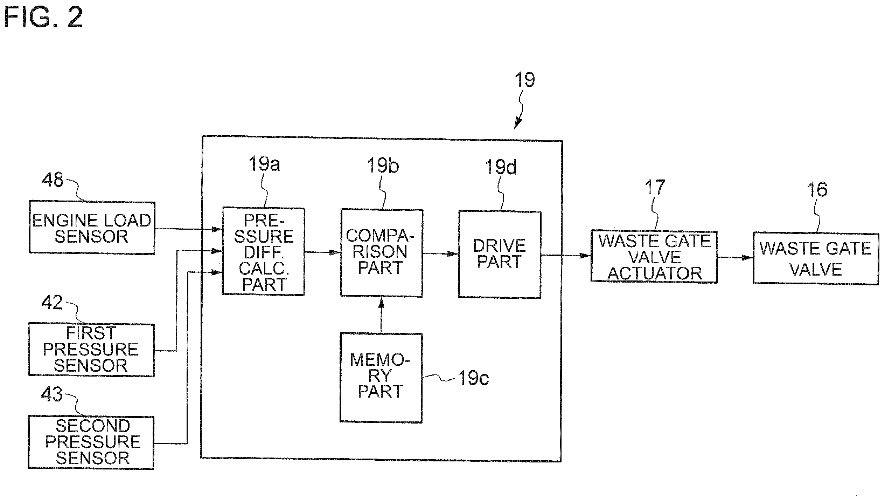

The waste gate valve controller 19 includes, as shown in FIG. 2, a pressure difference calculation part 19a configured to calculate pressure difference between pressure values detected by the first pressure sensor 42 and the second pressure sensor 43 on the basis of the detected pressure values, a comparison part 19b configured to compare the pressure difference calculated by the pressure difference calculation part 19 and a threshold set in advance, a memory part 19c configured to store the threshold, and a drive part 19d configured to operate the waste gate valve 16 in a closing direction if the pressure difference calculated by the comparison part 19b is smaller than the threshold and operate the waste gate valve 16 in an opening direction if the calculated pressure difference is greater than the threshold. The waste gate valve controller 19 is configured to operate when the engine 1 starts. To the pressure difference calculation part 19a, besides the first pressure sensor 42 and the second pressure sensor 43, an engine load sensor 48 is electrically connected. The engine load sensor 48 will be described below in detail. The drive part 19d operates the waste gate valve actuator 17 in accordance with control signals from the drive part 19d, so that the waste gate valve 16 opens and closes.

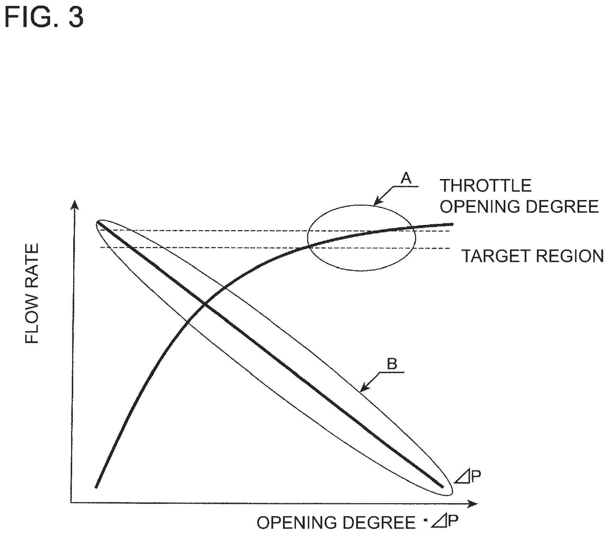

Now, with reference to FIG. 3, the pressure difference between the upstream side and the downstream side of the throttle valve 23 (hereinafter, referred to as "pressure difference across the throttle valve") and the flow rate of intake air flowing through the intake passage 7 will be described. FIG. 3 is a diagram showing the relationship between the flow rate of intake air, the opening degree of the throttle valve 23, and the pressure difference across the throttle valve. In the graph, y-axis is the flow rate of intake air, and x-axis is the opening degree of the throttle valve 23 and the pressure difference across the throttle valve. As described above, in a typical technique, the waste gate valve 16 is opened when the opening degree of the throttle valve 23 is less than a predetermined value and closed when the opening degree of the throttle valve 23 is not less than the predetermined value. However, when the opening degree of the throttle valve 23 is nearly fully-open (region indicated by arrow A), the sensitivity with respect to the flow rate is low. Thus, using a throttle valve opening degree that is nearly fully-open may deteriorate the control accuracy.

on the other hand, the relationship between the pressure difference across the throttle valve and the flow rate is a linear relationship (range indicated by arrow B), and thus the sensitivity with respect to the flow rate is high in the entire region of the throttle valve opening degree. The present invention is based on the relationship between the pressure difference across the throttle valve and the flow rate.

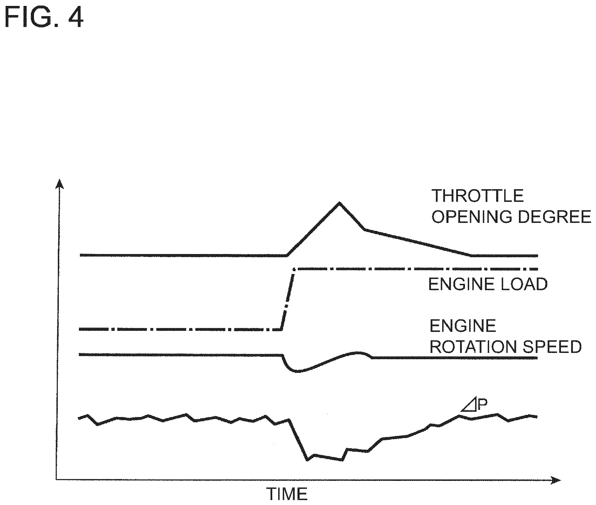

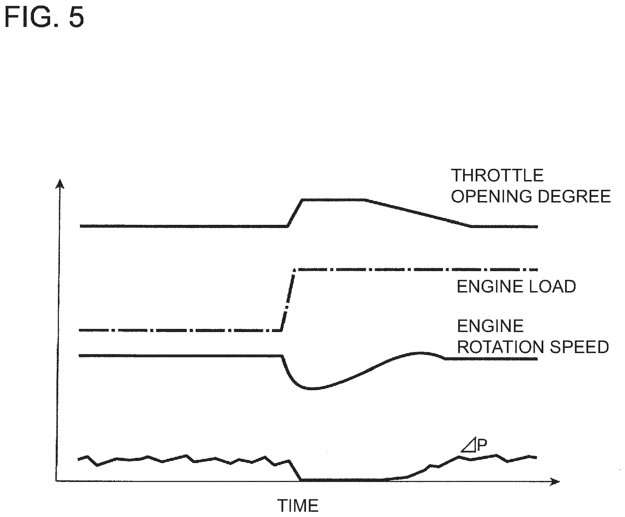

The control in which the pressure difference across the throttle valve is varied will be described with reference to FIGs. 4 and 5. In the drawings, y-axis is the magnitude of various parameters (throttle opening degree, engine load, engine rotation speed, pressure difference ΔP), and x-axis is time. As shown in FIG. 4, while the throttle valve 23 (see FIG.1) is for controlling the flow rate of intake air, if the engine load shown by solid line rapidly increases, the engine rotation speed decreases, and the throttle valve 23 opens to increase the intake amount. At this time, with a greater margin in the pressure difference ΔP (with the pressure difference being relatively larger), the intake amount can be increased, and it is possible to improve the responsiveness with respect to the load variation even further. Herein, the pressure difference ΔP decreases once and increases gradually again, because supply of intake air by the exhaust turbocharger 10 (FIG. 1) catches up and intake air becomes gradually excess, where the throttle valve 23 is controlled toward the close side and the pressure difference ΔP increases.

On the other hand, as shown in FIG. 5, if there is no margin in the pressure difference ΔP (the pressure difference is relatively small), when the engine load shown by solid line increases rapidly and the engine rotation speed decreases, even if the throttle valve 23 (see FIG. 1) opens to increase the intake amount, the waste gate valve 16 (see FIG. 1) operates to the open side and supply of intake air by the exhaust turbocharger (see FIG. 10) decreases, because there is no margin in the pressure difference ΔP. As a result, the increase in the rotation speed slows down and the rotation speed variation increases. Thus, the pressure difference ΔP needs to have a margin of a certain magnitude. However, an excessively large pressure difference ΔP increases pumping loss unnecessarily. Thus, in the present invention, a threshold is set for the memory part 19c (FIG. 2), that ensures a necessary pressure difference ΔP and also satisfies a minimum pressure difference ΔP that does not increase the rotation speed variation of the engine 1.

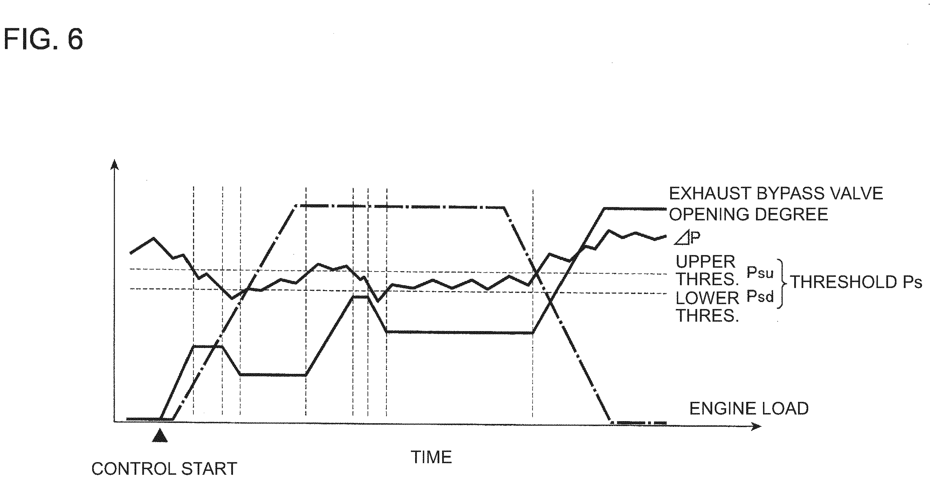

The above threshold Ps is, as shown in FIG. 6, set so as to include an upper limit threshold Psu and a lower limit threshold Psd, thus having a control width.

Next, operation of the engine 1 with an exhaust turbocharger will be described with reference to FIGs. 1 and 6. If an intake amount is excess, the throttle valve operates to the close side to maintain the rotation speed to be constant. Thus, the pressure difference across the throttle valve exceeds the upper limit threshold Psu, and the waste gate valve 16 operates toward the open side. Thus, it is possible to avoid an increase in the pumping loss without reducing the opening degree of the throttle valve 23.

Further, if the intake amount is insufficient, the throttle valve operates to the open side to maintain the rotation speed to be constant. Thus, the pressure difference across the throttle valve becomes smaller than the upper limit threshold Psd, and the waste gate valve 16 operates to the close side. Thus, it is possible to ensure load responsiveness without increasing the opening degree of the throttle valve 23.

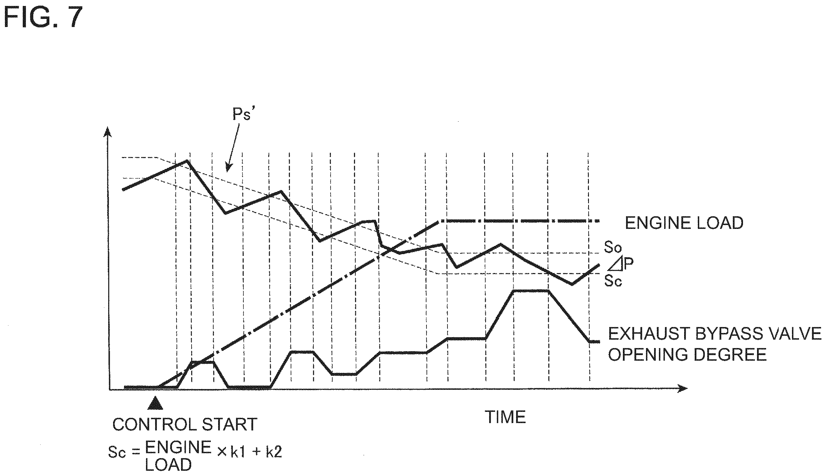

In the embodiment described above, the threshold Ps is constant. Nevertheless, as shown in FIGs. 1 and 7A, a modified threshold Ps' that is greater than the threshold Ps may be set. In this case, the modified threshold Ps' is set to be a linear function with respect to the engine load where the threshold decreases with an increase in the load of the engine 1. In FIG. 7A, the modified threshold Ps' is set as a linear function having a negative slope. In this way, for instance, in a low-load region where the risk of variation of the engine load is low, it is possible to control the opening degree of the waste gate valve 16 at a small side. The modified threshold Ps' may be set as a map in the memory part 19c (see FIG. 2).

In the above described embodiment, the modified threshold Ps' is set as a function of the engine load. Nevertheless, the modified threshold Ps' may be set as a function of the temperature of the lubricant oil inside the engine 1, which has a strong relationship with the engine load responsiveness. In this case, a lubricant oil temperature sensor 49 (see FIG. 1) for detecting the temperature of lubricant oil is provided for the engine 1, and is electrically connected to the waste gate valve controller 19 via the gas amount control valve controller 40.

An embodiment of the present invention has been described above. However, the present invention is not limited thereto, and various modifications may be applied as long as they do not depart from the object of the present invention. For instance, some of the above described embodiments may be combined upon implementation.

### Description of Reference Numerals

- 1: Engine with exhaust turbocharger
- 3: Exhaust passage
- 5: Waste heat recovery device
- 7: Intake passage
- 10: Exhaust turbocharger
- 11: Exhaust turbine
- 12: Compressor
- 14: Exhaust bypass passage
- 16: Waste gate valve
- 17: Waste gate valve actuator
- 19: Waste gate valve controller
- 19a: Pressure difference calculation part
- 19b: Comparison part
- 19c: Memory part
- 19d: Drive part
- 21: Intake cooler
- 23: Throttle valve
- 25: Mixer
- 27: Throttle valve actuator
- 30: Throttle valve controller
- 33: Gas amount control valve
- 35: Fuel gas passage
- 37: Intake air passage
- 40: Gas amount control valve controller
- 42: First pressure sensor
- 43: Second pressure sensor
- 44: Intake temperature sensor
- 47: Engine rotation speed sensor
- 48: Engine load sensor
- 49: Lubricant oil temperature sensor
- Ps: Threshold
- Ps': Modified threshold
- Psd: Lower limit threshold
- Psu: Upper limit threshold

## Claims

1. An engine with an exhaust turbocharger, comprising:
an exhaust bypass passage connected from an inlet of the exhaust turbo charger in an exhaust passage to an outlet of the exhaust turbocharger, bypassing a turbine of the exhaust turbocharger;
a waste gate valve configured to regulate an engine output by opening and closing the exhaust bypass passage;
a throttle valve disposed in an intake passage between the exhaust turbocharger and the engine and configured to control an intake amount to the engine;
a first pressure sensor and a second pressure sensor disposed upstream and downstream of the throttle valve in the intake passage, and configured to detect an intake pressure in the intake passage; and
a valve open-close control unit configured to calculate a pressure difference on the basis of pressure values detected by the first pressure sensor and the second pressure sensor, close the waste gate valve if the calculated pressure difference is smaller than a threshold which is set in advance, and open the waste gate valve if the calculated pressure difference is greater than the threshold.

2. The engine with an exhaust turbocharger according to claim 1,
wherein the threshold is set to be constant in a region where an engine load is high, and is set to be a threshold greater than the constant threshold in a region where the engine load is low, and
wherein the valve open-close control unit is configured to control an opening degree of the waste gate valve to be smaller in a region where the threshold is greater than the constant threshold, and control the opening degree of the waste gate valve to be greater in a region where the threshold is constant.

3. The engine with an exhaust turbocharger according to claim 2,
wherein the threshold in the region where the threshold is greater than the constant threshold is set in advance as a function or a map with respect to a load of the engine such that the threshold decreases with an increase in the engine load.

4. The engine with an exhaust turbocharger according to claim 2,
wherein the threshold in the region where the threshold is greater than the constant threshold is set in advance as a function or a map with respect to a lubricant oil temperature of the engine such that the threshold decreases with an increase in the lubricant oil temperature.

## Amended claims

### Amended claims under Art. 19.1 PCT

**1.** An engine with an exhaust turbocharger, comprising:
an exhaust bypass passage connected from an inlet of the exhaust turbo charger in an exhaust passage to an outlet of the exhaust turbocharger, bypassing a turbine of the exhaust turbocharger;
a waste gate valve configured to regulate an engine output by opening and closing the exhaust bypass passage;
a throttle valve disposed in an intake passage between the exhaust turbocharger and the engine and configured to control an intake amount to the engine;
and
a valve open-close control unit configured to calculate a pressure difference across the throttle valve, close the waste gate valve if the calculated pressure difference is smaller than a threshold which is set in advance, and open the waste gate valve if the calculated pressure difference is greater than the threshold,
wherein the threshold is set to be constant in a region where an engine load is high, and is set to be a threshold greater than the constant threshold in a region where the engine load is low.

**2.** The engine with an exhaust turbocharger according to claim 1,
wherein the valve open-close control unit is configured to control an opening degree of the waste gate valve to be smaller in a region where the threshold is greater than the constant threshold, and control the opening degree of the waste gate valve to be greater in a region where the threshold is constant.

**3.** The engine with an exhaust turbocharger according to claim 2,
wherein the threshold in the region where the threshold is greater than the constant threshold is set in advance as a function or a map with respect to a load of the engine such that the threshold decreases with an increase in the engine load.

**4.** The engine with an exhaust turbocharger according to claim 2,
wherein the threshold in the region where the threshold is greater than the constant threshold is set in advance as a function or a map with respect to a lubricant oil temperature of the engine such that the threshold decreases with an increase in the lubricant oil temperature.
